Europäisches Patentamt

European Patent Office

Office européen des brevets

(11) Publication number: **0 357 851**
**A1**

## (12) EUROPEAN PATENT APPLICATION

(21) Application number: 88308276.0

(51) Int. Cl.⁵: **B60C 23/00**

(22) Date of filing: 07.09.88

(43) Date of publication of application:
**14.03.90 Bulletin 90/11**

(84) Designated Contracting States:
**AT BE CH DE ES FR GB GR IT LI LU NL SE**

(71) Applicant: **Di Salvo, Reno**
**33 Rose Green Drive**
**Thornhill Ontario L4J 2R8(CA)**

(72) Inventor: **Di Salvo, Reno**
**33 Rose Green Drive**
**Thornhill Ontario L4J 2R8(CA)**

(74) Representative: **Brown, David Alan et al**
**MATHYS & SQUIRE 10 Fleet Street**
**London EC4Y 1AY(GB)**

(54) Inflating device.

(57) A method of inflating a deflated body using an inflating device, the inflating device (10) comprising at least one predetermined length of tubing (15) having at each end a valve mechanism (20) for controlling the ingress and egress of a gas through the inflating device. The method comprises attaching one valved end (18) of the inflating device (10) to a valved end of a deflated body, such as a vehicle tyre (50), attaching another valved end of the inflating device to a valved end of at least one inflating body containing a gas under pressure, such as an inflated tyre (40) and waiting for a predetermined amount of time until the deflated body (50) inflates to an acceptable level at a specified volume and pressure, while the inflated body (40) remains inflated at an acceptable level of volume and pressure. The valved ends of the inflating device are then disconnected and the device stored for future use. In one embodiment, the inflating device (10) comprises a helical tubular member (15) with a Schraeder type valve (20) at each end.

FIG.1.

## FIELD OF INVENTION

This invention relates to inflating devices and more specifically to those used for inflating vehicle pneumatic tires.

## BACKGROUND OF THE INVENTION

A host of inflating devices exist within the prior art. Manual pumps are available to inflate tires which are underinflated at less than the recommended volume at a specific pressure. Further, cans of compressed air and portable compressors are available which a vehicle operator may use to inflate his/her tires. However, the cans of compressed air are not reusable and may be a safety hazard if punctured; the manual pumps rust and are quite difficult and strenuous to use; and the portable compressors are expensive to acquire.

It is therefore an object of this invention to provide a simple reliable method of inflating a tire and apparatus therefor.

Further and other objects will become apparent to a man skilled in the art when reviewing the following summary of the invention and the more detailed description of the preferred embodiments illustrated herein.

## SUMMARY OF THE INVENTION

According to one aspect of the invention, an inflating device is provided, the inflating device comprising at least one predetermined length of tubing having at least two ends, the tube ends being in communication with one another, the at least two ends having fastened thereat valved means for controlling the ingress and egress of a gas through the inflating device in use.

According to another aspect of the invention, an inflating device is provided, the inflating device comprising one continuous extension of tubing of a predetermined length having two ends, the tubing preferably being a helically spiraling tube, the tube ends having fastened thereat valve means for controlling the ingress and egress of a gas through the inflating device in use.

According to another aspect of the invention, a method of inflating a deflated body using an inflating device is provided, the inflating device comprising at least one predetermined length of tubing having at least two ends, the tube ends being in communication with one another, the at least two ends having fastened thereat valve means for controlling the ingress and egress of a gas through the inflating device, the method comprising attaching a first valved end of the inflating device to a second valved end of a deflated body; attaching at least a third valved end of the inflating device to at least a fourth valved end of at least one inflating body containing a gas under pressure; waiting for a predetermined amount of time until the deflated body inflates to an acceptable level at a specified volume and pressure, while the at least one inflated body remains inflated at an acceptable level of volume and pressure; disconnecting the first valved end and the second valved end, disconnecting the at least third valved end and the at least fourth valved end; storing the inflating device for future use.

According to another aspect of the invention, a method of inflating a deflated body using an inflating device is provided, the inflating device comprising one continuous extension of tubing of a predetermined length having two ends, the tubing preferably being a helically spiraling tube, the tube ends having fastened thereat valve means for controlling the ingress and egress of a gas through the inflating device; the method comprising attaching a first valved end of the inflating device to a second valved end of a deflated body; attaching a third valved end of the inflating device to a fourth valved end of an inflated body containing a gas under pressure; waiting for a predetermined amount of time until the deflated body inflates to an acceptable level at a specified volume and pressure, while the inflated body remains inflated to an acceptable level of volume and pressure; disconnecting the first valved end and the second valved end; disconnecting the third valved end and the fourth valved end; storing the inflating device for future use.

According to yet another aspect of the invention, the inflating device and method thereof may comprise valve means which are Schraeder type valves incorporating check valve means, thus allowing the pressure in the deflated body and the inflated body to substantially equalize.

According to another aspect of the invention, the method incorporating the use of the inflating device may comprise deflated and inflated bodies which are pneumatic tires.

## BRIEF DESCRIPTION OF THE DRAWINGS

Figure 1 is a perspective view of the instant invention in a preferred embodiment of the invention.

Figures 2 and 2A are close-up cross-sectional views of the two-way valve of Figure 1 indicated as item 20 in a preferred embodiment of the invention.

Figure 3 is a side view of the instant invention in use inflating a deflated tire in a preferred embodiment of the invention.

## DETAILED DESCRIPTION OF THE PREFERRED EMBODIMENTS

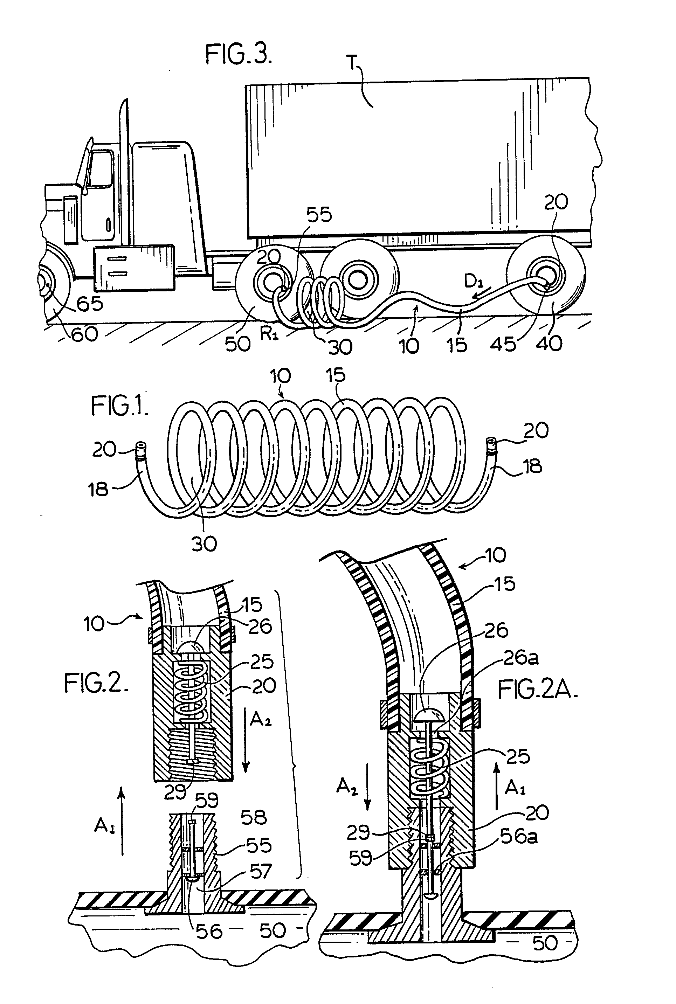

Referring now to Figure 1, inflating mechanism 10 is illustrated being manufactured from one continuous tubular member 15, having disposed at the ends thereof two-way valves 20, one at each end thereof. The tubular body 15 extending between the two-way valves located at the extremes of the inflating mechanism has a multiplicity of spirals indicated by loop 30, wherein the spirals create a resilient stretching of inflating mechanism 10. Such stretching allows for a compact design of the inflating mechanism 10, whereby the tube 15 may be stretched as required by the use but is retained and restored in its unloaded condition in a spring-like multiplicity of helical spirals. Of course it is understood that the spirals are not necessary in alternative embodiments but offer a compact advantage which is preferred in the instant invention. The valves 20 located at the ends 18 of tubing 15 are two-way valves. The purpose of the two-way valves is to allow the air to flow in either direction is use. Further, an equilibrium between an inflated body and a deflated body may be reached by using the two-way valve.

Referring now to Figures 2 and 2A, valve mechanism 20 is illustrated connected to tubing 15 by conventional methods having a pin 29 extending through the center thereof, such pin being resiliently biased by spring member 25, the pin 29 having at the end thereof the head 26 having a generally arcuate portion proximate the tubing 15 and having a flat portion proximate the valve 20. Figure 2 illustrates the inflating device separated from tire 50, while Figure 2A illustrates the tire and inflating device connected and the marrying of the parts thereof. A tire 50 is shown in part having a male valve portion 55 compatibly shaped for insertion into a female valve portion 20. The male portion 55 also has a pin 59 contained therein having a head 56 disposed at the end thereof proximate the tire 50. The head design of course, as is well known in the art, prevents the passage of air from the tire 50 to the surrounding environment. When pin 59 and pin 29 contact one another as best illustrated in Figure 2A, such contact will move heads 26 and 56 to a point where air may pass one way or the other depending on the pressures contained within tubing 15 and tire 50. As a result of the pressures found within tire 50 and tubing 15, the air will move in direction A2, as tire 50 is illustrated as the area of lowest pressure.

Referring now to Figure 3, the instant invention is illustrated in use being connected to a deflated tire 50, such deflation being insufficient to lose the seal of the tire about its rim. Hence, inflating device 10 is installed upon tire 50 and upon tire 40 by the valve portions 20, 55 and 45 respectively, as best illustrated in Figure 2A. The truck T is illustrated on surface R1 wherein the instant invention 10 is installed as previously mentioned wherein the tire pressure in tire 40 (estimated to be at approximately 75 PSI) will move the volume of air contained in tire 40 in direction DI towards tire 50 until such time as tire 50 is inflated to a sufficient level such that the operator may move the vehicle, or until such time as the pressures in the tires 50 and tire 40 are substantially balanced. The use of the two-way valves allows such balancing to occur while the removal of either end of the inflating device 10 will stop the air flow. Of course, if tire 50 is deflated to such a substantial level that inflating it by using some of the pressure contained within tire 40 would further cripple the vehicle T, then only a portion of the pressure within tire 40 may be applied and used within tire 50; then in progression air may be taken from any or all of the tires of the vehicle in a similar manner as described above. In this way, a vehicle which has a low tire in a remote area that vehicle operators travel, the tire may be inflated to a sufficient level to allow the operator to move the vehicle to a service station for further examination and repair of the tire 50. Of course if tire 50 is completely flat, wherein the seal about the rim is lost, then the instant invention will unfortunately be of no use. However, it is also mentioned that none of the aforementioned prior art will be of any use unless a seal is obtained within the tire 50. The instant invention is of particularly beneficial use when a tire has a slow leak or when because of rough roads the seal is momentarily lost forcing air from the tire.

It is also understood that such a device may be used to balance the air pressures between any deflated and inflated body or between two unequally inflated bodies or tires thus balancing the pressures therein. Further, an inflatable mattress may be inflated by using the instant invention along with an inflated body of sufficient volume and pressure contained therein to so inflate the inflatable mattress. Such a body may be a spare tire, a disposable canister of pressurized air, an air receiver built for such a purpose, and any other body which would accomplish the aforementioned task.

It is also intended that the instant invention would work in inflating a deflated tire from an air receiver specifically constructed for use with the instant invention. The air receiver would contain a charge of pressurized air and would be kept in storage within the vehicle until needed.

As may changes can be made to the preferred embodiments without departing from the scope of the invention, it is intended that all matter contained herein be interpreted as illustrative of the invention and not in a limiting sense.

## Claims

1. An inflating device comprising a least one predetermined length of tubing having at least two ends, the tube ends being in communication with one another, the at least two ends having fastened thereat valved means for controlling the ingress and egress of a gas through the inflating device in use.

2. An inflating device comprising one continuous extension of tubing of a predetermined length having two ends, the tube ends having fastened thereat valve means for controlling the ingress and egress of a gas through the inflating device in use.

3. The inflating device of claim 2 wherein the tubing is a helically spiraling tube.

4. A method of inflating a deflated body using an inflating device, the inflating device comprising at least one predetermined length of tubing having at least two ends, the tube ends being in communication with one another, the at least two ends having fastened thereat valve means for controlling the ingress and egress of a gas through the inflating device, the method comprising attaching a first valved end of the inflating device to a second valved end of a deflated body; attaching at least a third valved end of the inflating device to at least a fourth valved end of at least one inflating body containing a gas under pressure; waiting for a predetermined amount of time until the deflated body inflates to an acceptable level at a specified volume and pressure, while the at least one inflated body remains inflated at an acceptable level of volume and pressure; disconnecting the first valved end and the second valved end, disconnecting the at least third valved end and the at least fourth valved end; storing the inflating device for future use.

5. A method of inflating a deflated body using an inflating device, the inflating device comprising one continuous extension of tubing of a predetermined length having two ends, the tube ends having fastened thereat valve means for controlling the ingress and egress of a gas through the inflating device; the method comprising attaching a first valved end of the inflating device to a second valved end of a deflated body; attaching a third valved end of the inflating device to a fourth valved end of an inflated body containing a gas under pressure; waiting for a predetermined amount of time until the deflated body inflates to an acceptable level at a specified volume and pressure, while the inflated body remains inflated to an acceptable level of volume and pressure; disconnecting the first valved end and the second valved end; disconnecting the third valved end and the fourth valved end; storing the inflating device for future use.

6. The inflating device of claim 1, 2 or 3 wherein the inflating device comprises valve means which are Schraeder type valves incorporating check valve means, thus allowing the pressure in the deflated body and the inflated body to substantially equalize.

7. The inflating device and method thereof of claim 4 or 5 wherein the inflating device and method thereof comprises valve means which are Schraeder type valves incorporating check valve means, thus allowing the pressure in the deflated body and the inflated body to substantially equalize.

8. The method of claim 4 or 5 wherein the method incorporating the use of the inflating device comprises deflated and inflated bodies which are pneumatic tires.

9. The method of claim 7 wherein the method incorporating the use of the inflating device comprises deflated and inflated bodies which are pneumatic tires.

FIG.3.

FIG.1.

FIG.2.

FIG.2A.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 269 312  (BRESSLER)<br>* Whole document * | 1,2,4,5<br>,7,8,9 | B 60 C  23/00 |
| A | | 3 | |
| X | FR-A-2 029 227  (BOURCIER DE CARBON)<br>* Whole document * | 1,2,4,5<br>,7,8,9 | |
| Y | | 3 | |
| Y | US-A-3 288 169  (MOSS)<br>* Claims; figures * | 3 | |
| X | DE-A-1 505 891  (ROHRBACH)<br>* Claims; figures * | 1,4,7,8<br>,9 | |
| X | US-A-2 663 348  (FARRIS)<br>* Whole document * | 1,4,6,7<br>,8,9 | |
| X | US-A-2 227 601  (O'BRIEN)<br>* Whole document * | 1,2,4,5<br>,7,8,9 | |

TECHNICAL FIELDS SEARCHED (Int. Cl.4)

B 60 C

The present search report has been drawn up for all claims

| Place of search | Date of completion of the search | Examiner |
|---|---|---|
| THE HAGUE | 02-05-1989 | PIRIOU J.C. |